# EUROPEAN PATENT APPLICATION

(11) **EP 4 606 281 A1**
(43) Date of publication of application: **27.08.2025**
(21) Application number: 24158590.0
(22) Date of filing: 20.02.2024
(51) Int. Cl.: A47J 36/38, A47J 37/06, F24C 15/20, F24C 15/32

(54) **COOKING APPLIANCE COMPRISING AN EXHAUST ASSEMBLY**

(71) Applicant: Versuni Holding B.V., 5656 AE Eindhoven (NL)
(72) Inventor: BONACCORSO, Davide, 5656 AE Eindhoven (NL)
(74) Representative: Vollering, Stefanus Franciscus Maria

(57) **Abstract**

Provided is a cooking appliance comprising a cooking chamber and a heating element. The cooking appliance includes a circulation system for circulating air heated by the heating element in the cooking chamber. The circulation system comprises a fan (106) and a motor assembly. The motor assembly is switchable between a first mode in which the motor assembly rotates the fan in a first direction to displace air along a first flow direction (115), and a second mode in which the motor assembly rotates the fan in a second direction, opposite the first direction, to displace air along a second flow direction (116) different from the first flow direction. The cooking appliance further comprises an exhaust assembly (117) comprising an exhaust vent (118). The exhaust assembly is configured to change how much air is vented from the cooking appliance via the exhaust vent according to which of the first mode and the second mode is adopted by the motor assembly.

## Description

### FIELD OF THE INVENTION

The invention relates to a cooking appliance, such as an air-frying appliance.

In particular, the invention concerns controlling venting of air from inside such a cooking appliance to the cooking appliance's surroundings.

### BACKGROUND OF THE INVENTION

A diverse range of cooking appliances, such as air fryers, air cookers and food steamers, has become available for meeting different consumer demands.

Such cooking appliances, and air-frying appliances in particular, may be equipped with various features, at least some of which affect their internal structure.

One example of a key innovation in this field is introduction of a steam cooking function in cooking appliances, such as air-frying appliances, that are conventionally only equipped with convection cooking-type functionality.

Steam cooking requires, by definition, sufficient humidity in the cooking appliance's cooking chamber. Such humidity may not, however, be desirable for other cooking functionality, such as air frying, for which release of humidity from the cooking chamber is desirable to allow drying of food. Such drying of food may be required in order for the intended cooking result, e.g. crunchiness of the cooked food, to be realized.

Controlling the humidity in the cooking chamber may involve controlling how much air is vented from the cooking appliance to its surroundings. When more moist air in the cooking chamber is desired, e.g. when steam cooking food, less air may be vented from the cooking appliance. This means that less water may be needed to maintain humidity at the intended level in the cooking chamber. Venting less air may also mean that less condensation is formed in areas where the air escapes from the cooking appliance (noting that such condensation tends to require appropriate handling). Moreover, by less air being vented from the cooking chamber, there may be less wastage of heat and steam, with concomitant energy saving/efficiency benefits.

On the other hand, when relatively quick drying and browning of food is required, more air may be vented from the cooking appliance, for example by an exhaust vent of the cooking appliance being fully open.

A conventional solution for fulfilling each of the above-described requirements is for the cooking appliance to include a so-called "variable exhaust", which may involve a door or slider being manually or automatically actuated to switch between a first configuration and a second configuration. In the first configuration, e.g. an air frying configuration in the case of an air-frying appliance, more air may be vented from the cooking appliance due to the exhaust vent being open. In the second configuration, e.g. a steam cooking configuration, less air may be vented from the cooking appliance due to the exhaust vent being closed, or at least being more closed than in the first configuration.

Such a manually or automatically actuatable door or slider may, however, risk increasing complexity of the cooking appliance, in terms of how the cooking appliance is operated by a user and/or in terms of the physical design of the cooking appliance. Regarding the latter, the number of components included in the cooking appliance tends to be greater, with associated higher manufacturing costs, in order for the cooking appliance to incorporate the "variable exhaust" functionality.

### SUMMARY OF THE INVENTION

The invention is defined by the claims.

According to examples in accordance with an aspect of the invention, there is provided a cooking appliance comprising: a cooking chamber; a heating element; a circulation system for circulating air heated by the heating element in the cooking chamber, wherein the circulation system comprises a fan and a motor assembly, the motor assembly being switchable between a first mode in which the motor assembly rotates the fan in a first direction to displace air along a first flow direction, and a second mode in which the motor assembly rotates the fan in a second direction, opposite the first direction, to displace air along a second flow direction different from the first flow direction; and an exhaust assembly comprising an exhaust vent, the exhaust assembly being configured to change how much air is vented from the cooking appliance via the exhaust vent according to which of the first mode and the second mode is adopted by the motor assembly.

In this way, the configuration of the exhaust assembly enables the amount, for example flow rate, of air being vented from the cooking appliance to be changed based on the first mode or the second mode being adopted by the motor assembly.

Thus, controlling how much air is vented from the cooking appliance may be implemented by operating component(s), in particular the motor assembly, that is/are already included in the cooking appliance for reasons other than venting air therefrom. Simplicity of use and/or physical design of the cooking appliance can therefore be maintained in spite of inclusion of variable exhaust functionality.

The exhaust assembly can be configured in any suitable manner provided that the exhaust assembly enables varying of how much air is vented from the cooking appliance via the exhaust vent according to which of the motor assembly's first mode and second mode is adopted. Various exhaust assemblies configured in this manner are described herein below.

In some embodiments, the exhaust assembly is configured to change how much air is vented from the cooking appliance via the exhaust vent according to which of the first flow direction and the second flow direction the air is displaced along by the fan. In such embodiments, the different flow directions of air displaced by the fan when the fan is rotated by the motor assembly in the first and second directions may be used to change how much air is vented from the cooking appliance.

For example, air flowing along the first flow direction, when the motor assembly is in the first mode, may be received by the exhaust assembly and thereby vented via the exhaust vent, whereas air flowing along the second flow direction may bypass the exhaust assembly such that less air in the cooking appliance is vented via the exhaust vent when the motor assembly is in the second mode compared to when the motor assembly is in the first mode.

In some embodiments, the exhaust assembly comprises an exhaust channel that extends to reach the exhaust vent at a downstream end of the exhaust channel. Such an exhaust channel can be arranged, e.g. orientated, relative to the first and second flow directions so that more air is directed into the exhaust channel when, for example, the air is flowing in the first flow direction than when the air is flowing in the second flow direction.

The exhaust channel may be arranged so that air displaced by the fan in the first flow direction is directed into the exhaust channel via an upstream opening of the exhaust channel, and at least part of air displaced by the fan in the second flow direction is directed past, rather than into, the upstream opening. Such positioning of the exhaust channel, including the upstream opening of the exhaust channel, relative to the first flow direction and the second flow direction in order to vary how much air is vented from the cooking appliance can be regarded as making use of fluid dynamics principles to provide variable exhaust functionality.

In such embodiments, additional moving components, such as a door or slider for controlling venting of air via the exhaust vent, and associated user interface elements for controlling such moving components, may be obviated. This may assist to reduce the cost and complexity of the cooking appliance, as well as assisting to simplify operation of the cooking appliance for the user.

In some embodiments, the exhaust assembly comprises an air restriction member that is moveable by air, displaced by the fan in the second flow direction, from an open position to a closed position, in which closed position the air restriction member restricts said venting of air relative to when the air restriction member is in the open position. Such an air restriction member may assist to provide a greater change of the amount, e.g. flow rate, of air being vented from the cooking appliance via the exhaust vent when the motor assembly is in the first mode compared to when the motor assembly is in the second mode.

Since the air restriction member may be moved to the closed position by air displaced by the fan in the second flow direction, the user may not be burdened with having to manually move the air restriction member to the closed position and/or additional user interface elements for manually moving the air restriction member may be obviated.

In some embodiments, the air restriction member is arranged to open and close the upstream opening of the exhaust channel.

In some embodiments, the cooking appliance comprises a biasing element for biasing the air restriction member to the open position, with the air restriction member being moveable against the bias provided by the biasing element by air, displaced by the fan in the second flow direction, to cause the air restriction member to move to the closed position. The biasing element, such as a spring, e.g. a torsion spring, may assist to keep the air restriction member in the open position when the motor assembly is in the first mode and the fan is correspondingly displacing air in the first flow direction.

In some embodiments, the air restriction member is moveable by air, displaced by the fan in the first flow direction, to the open position. Thus, the air flowing in the first flow direction may be used to move the air restriction member to the open position, and thereby assist venting of air from the cooking appliance via the exhaust vent.

The air restriction member may be configured to allow fluid communication, via the exhaust vent, with the cooking appliance's surroundings when the air restriction member is in the closed position. This can help to minimize the risk of pressure build-up, e.g. in the cooking chamber, and/or hot air being released in unintended ways, such as via gaps in a housing, e.g. around a drawer, of the cooking appliance. Regarding the latter, deliberately providing fluid communication route(s) past and/or through the air restriction member can assist to minimize the risk that the housing's integrity is compromised by unintended leakage of hot air and/or reduces the risk of condensation formation on an exterior, e.g. a front-facing exterior, of the cooking appliance.

In some embodiments, the fluid communication is provided, at least in part, by one or more holes in the air restriction member. Such hole(s) may provide a relatively straightforwardly implementable and controllable way of configuring the air restriction member to allow fluid communication with the cooking appliance's surroundings, in other words the atmosphere surrounding the cooking appliance, via the exhaust vent when the air restriction member is in the closed position.

In some embodiments, the motor assembly comprises a direct current, DC, motor. Including such a DC motor in the motor assembly can make switching between the first mode and the second mode, e.g. as well as controlling speed of the fan and thus the airflow, relatively straightforward to implement.

In such embodiments, the motor assembly may be switchable between the first mode and the second mode by inverting a polarity of voltage across the DC motor.

Alternatively or additionally, the motor assembly may be controllable to vary a speed of rotation of the fan in the first mode and/or in the second mode. Thus, the speed at which the fan is rotated, as well as the configuration of the exhaust assembly, can be used to control the amount, e.g. flow rate, of air vented from the cooking appliance via the exhaust vent.

In some embodiments, the cooking appliance comprises a steam supply and/or steam production assembly for providing steam in the cooking chamber. The steam supply and/or steam production assembly may be activatable to provide steam in the cooking chamber when, for example, a steam cooking mode of the cooking appliance is selected.

In such embodiments, the mode, in other words the first mode or the second mode, of the motor assembly that causes less air to be vented from the cooking appliance via the exhaust vent may be selected when, or in response to, operation of the steam supply and/or steam production assembly to provide steam in the cooking chamber.

Thus, selection of the mode of the motor assembly may assist to minimize wastage of steam and energy when steam cooking conditions are provided in the cooking chamber.

In some embodiments, the cooking appliance comprises a user interface configured to receive at least one first user entry indicative of user-selection of the first mode of the motor assembly, and at least one second user entry indicative of user-selection of the second mode of the motor assembly.

The at least one first user entry may, for example, correspond to user selection of a convection cooking mode, e.g. an air frying mode, with the at least one second user entry corresponding to user selection of a steam cooking mode.

The user interface can be of any suitable type. For example, the user interface can include a touchscreen, one or more button(s), and/or dial(s).

The cooking appliance can be of any suitable type. In some embodiments, the cooking device comprises a table-top cooking appliance for arranging on a kitchen tabletop or countertop.

The cooking appliance may comprise an air-frying appliance. Such an air-frying appliance may, for instance, constitute a type of table-top cooking appliance.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a cooking appliance according to an example;
FIG. 2 schematically depicts a fan and an exhaust assembly of a cooking appliance according to an example;
FIG. 3 schematically depicts a fan and an exhaust assembly of a cooking appliance according to another example; and
FIG. 4 schematically depicts an air restriction member for inclusion in an exhaust assembly of a cooking appliance according to a further example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a cooking appliance comprising a cooking chamber and a heating element. The cooking appliance includes a circulation system for circulating air heated by the heating element in the cooking chamber. The circulation system comprises a fan and a motor assembly. The motor assembly is switchable between a first mode in which the motor assembly rotates the fan in a first direction to displace air along a first flow direction, and a second mode in which the motor assembly rotates the fan in a second direction, opposite the first direction, to displace air along a second flow direction different from the first flow direction. The cooking appliance further comprises an exhaust assembly comprising an exhaust vent. The exhaust assembly is configured to change how much air is vented from the cooking appliance via the exhaust vent according to which of the first mode and the second mode is adopted by the motor assembly.

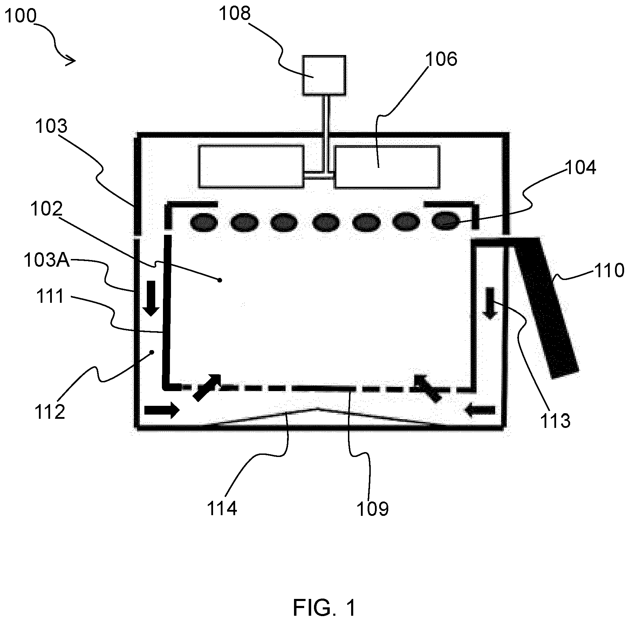

FIG. 1 schematically depicts a cooking appliance 100 according to an example. The cooking appliance 100 comprises a cooking chamber 102 in which food (not visible) is receivable. The cooking chamber 102 may be at least partly delimited by a cooking chamber wall 103.

The cooking appliance 100 includes a heating element 104, and a circulation system 106, 108 for circulating air heated by the heating element 104 in the cooking chamber 102. In some embodiments, such as shown in FIG. 1, the heating element 104 is arranged to irradiate the food received in the cooking chamber 102, as well as heating air that is circulated by the circulation system 106, 108.

The heating element 104 can have any suitable design. In some embodiments, the heating element 104 comprises, e.g. is defined by, a resistive heating element 104. Particular mention is made of a spiral resistive heating element 104 being included in the heating element 104. Air can, for example, be circulated by the circulation system 106, 108 through space(s) between coils of such a spiral resistive heating element 104 in order to heat the air. Such coils are schematically depicted in FIG. 1.

The circulation system 106, 108 comprises a fan 106 and a motor assembly 108, with rotation of the fan 106 by the motor assembly 108 causing the circulating of air.

In some embodiments, a fluid permeable food support 109 supports food thereon in the cooking chamber 102. The food support 109 can be formed of any suitable material. In some embodiments, the food support 109 comprises a metallic material, in other words a metal or a metal alloy. Such a metallic material is preferably coated with a non-stick coating, such as a fluoropolymer coating. In other embodiments, the food support 109 comprises, e.g. is formed from, a heat resistant polymer, such as silicone.

In some embodiments, such as shown in FIG. 1, the cooking appliance 100 comprises a drawer 103A that is slidable to provide access to the cooking chamber 102, with the food support 109 being included or arrangeable in the drawer 103A.

The drawer 103A may be mounted in any suitable manner that enables the drawer 103A to slide, e.g. relative to the rest of the cooking appliance 100, to provide access to the cooking chamber 102 and to (re-)close the cooking chamber 102. In some embodiments, the drawer 103A is mounted on rails, with sliding of the drawer 103A on the rails in a first direction enabling the cooking chamber 102 to be accessed and sliding of the drawer 103A on the rails in a second direction opposite to the first direction enabling the cooking chamber 102 to be closed.

It is noted that the cooking chamber 102 may be accessed in other ways, such as via a moveable lid (not visible in the Figures) that can be moved, e.g. by lifting, to enable the cooking chamber 102 to be accessed. Such a moveable lid may, for example, be pivotally mounted so that pivoting of the lid enables the cooking chamber 102 to be accessed.

The food support 109 can be arranged, e.g. mounted, in the cooking chamber 102 in any suitable manner. In some embodiments, such as shown in FIG. 1, a handle 110 is coupled or couplable to the food support 109, with the handle 110 assisting movement of the food support 109 into and out of the cooking chamber 102.

As well as enabling lifting and lowering of the food support 109, the handle 110 may additionally assist the user, via lateral pulling or pushing of the handle 110, to slide the drawer 103A to access or (re-)close the cooking chamber 102.

More generally, and irrespective of inclusion or otherwise of such a handle 110, the food support 109 may be removable from the cooking chamber 102.

Such removability may assist loading or unloading of food onto or from the food support 109, and can also assist with cleaning the food support 109 and the cooking chamber 102. Alternatively or additionally, removal of the food support 109 from the cooking chamber 102 may enable another type of food support 109 to be arranged in the cooking chamber 102, e.g. for cooking a different type of food and/or for implementing a different type of cooking. Regarding the latter, embodiments of the present disclosure concern convection cooking, such as air frying, as well as steam cooking in the cooking chamber 102, as will be described in more detail herein below.

In some embodiments, such as shown in FIG. 1, the cooking appliance 100 includes a partition wall 111 that at least partly delimits an inner cooking chamber arranged within the cooking chamber 102. In such embodiments, food may be received specifically within the inner cooking chamber.

A duct 112 may be defined between the cooking chamber wall 103 and the partition wall 111. Heated air may be circulated around the duct 112, into and through the inner cooking chamber, and back into the duct 112. This air circulation is denoted by the arrows 113 in FIG. 1.

In such embodiments, the duct 112 may be arranged to fluidly connect a top and a bottom of the inner cooking chamber to each other such that the circulating heated air passing through the inner cooking chamber traverses a height of the inner cooking chamber.

To this end, the food support 109 may have an air permeable base for allowing circulating air heated by the heating element 104 to access an underside of food supported by the food support 109. The air permeability of the air permeable base can be provided in any suitable manner, such as via an arrangement of apertures defined in the bottom of the food support 109.

The food support 109 may, for example, take the form of a basket whose bottom portion corresponds to the air permeable base.

In some embodiments, such as shown in FIG. 1, the cooking appliance 100 includes an air guide member 114 arranged to guide at least part of the heated air circulated by the circulation system 106, 108 into the inner cooking chamber.

In such embodiments, the air guide member 114 may be arranged in the duct 112. Thus, the air guide member 114 may assist to guide the at least part of the heated air from the duct 112 into the inner cooking chamber.

Any suitable design may be contemplated for the air guide member 114. The air guide member 114 may, for example, comprise a so-called star-fish shape. The star-fish shape comprises a plurality of radial fins which are shaped to guide the at least part of the heated air circulated by the circulation system 106, 108 into the inner cooking chamber.

More generally, the cooking chamber 102 and the circulation system 106, 108 may be arranged such that, when the cooking appliance 100 is orientated for use, at least part of the heated air circulated by the circulation system 106, 108 traverses a height of the cooking chamber 102.

The traversing of the height of the cooking chamber 102 may mean that the at least part of the heated air is forced through the food received in the cooking chamber 102. This may assist the cooking appliance 100 to provide a frying-type effect. Accordingly, the cooking appliance 100 can in such embodiments be regarded as an air-frying appliance.

It is noted that such a heated airflow through the food received in the cooking chamber 102 may not require the partition wall 111, the inner cooking chamber and the duct 112 described above. Thus, in some embodiments the partition wall 111, the inner cooking chamber and the duct 112 may be omitted.

For example, instead of the partition wall 111, the inner cooking chamber and the duct 112, the cooking appliance 100 may include an air permeable base, e.g. a mesh or grid plate, arranged or arrangeable inside the cooking chamber 102 for supporting food. In such embodiments, mass heated air circulation within the cooking chamber 102 may be provided, with both upward and downward airflow directions through the cooking chamber 102 being possible.

It is generally noted that the direction of airflow through the cooking chamber 102 is not particularly limited, and the cooking appliance 100 can be of any suitable type. In some embodiments, the cooking appliance 100 is a table-top cooking appliance 100 for arranging on a kitchen tabletop or countertop. The above-mentioned air-frying appliance may, for instance, be an example of a table-top cooking appliance 100.

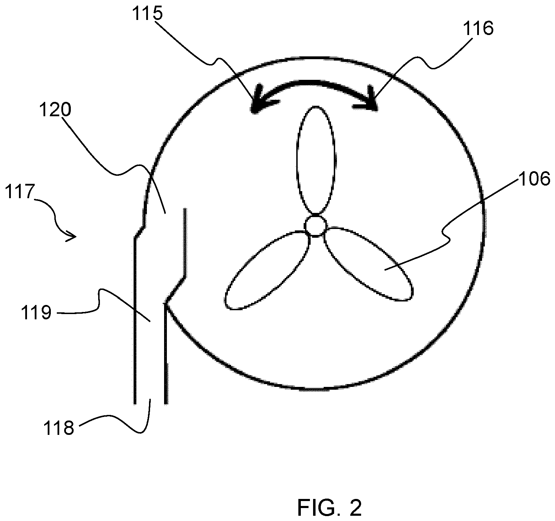

Referring to FIGs. 1 and 2, the motor assembly 108 is switchable between a first mode in which the motor assembly 108 rotates the fan 106 in a first direction to displace air along a first flow direction 115, and a second mode in which the motor assembly 108 rotates the fan 106 in a second direction, opposite the first direction, to displace air along a second flow direction 116 different from the first flow direction 115.

The motor assembly 108 can be configured in any suitable manner in order to enable the motor assembly 108 to be switchable between the first and second modes. In some embodiments, the motor assembly 108 comprises a direct current, DC, motor. Including such a DC motor in the motor assembly 108 can make switching between the first mode and the second mode, e.g. as well as controlling speed of the fan 106 and thus the airflow, relatively straightforward to implement.

In such embodiments, the motor assembly 108 may be switchable between the first mode and the second mode by inverting a polarity of voltage across the DC motor.

Alternatively or additionally, the motor assembly 108 may be controllable to vary a speed of rotation of the fan 106 in the first mode and/or in the second mode. Thus, the speed at which the fan 106 is rotated and thus the airflow through the cooking chamber 102, and also out of the cooking appliance 100 (as explained in more detail herein below), can be adjusted.

As schematically shown in FIG. 2, an exhaust assembly 117 of the cooking appliance 100 comprises an exhaust vent 118 for venting air from inside the cooking appliance 100, including inside the cooking chamber 102, to the cooking appliance's 100 surroundings.

More or less air may be vented via the exhaust vent 118 depending, for example, on the type of cooking being implemented in the cooking chamber 102 and/or on a cooking effect desired by a user of the cooking appliance 100.

In some embodiments, the cooking appliance 100 comprises a steam supply and/or steam production assembly for providing steam in the cooking chamber 102. The steam supply and/or steam production assembly may be activatable to provide steam in the cooking chamber when, for example, a steam cooking mode of the cooking appliance 100 is selected.

The steam supply and/or steam production assembly may, for example, include a reservoir for containing water for vaporizing to provide steam in the cooking chamber 102.

In some embodiments, the steam supply and/or steam production assembly may include a dispensing system for dispensing the water from the reservoir to a heated portion of the cooking appliance 100 where the dispensed water may be vaporized to generate steam.

It may be desirable to vent less air from the cooking appliance 100 via the exhaust vent 118 when the steam supply and/or steam production assembly is being operated to provide steam in the cooking chamber 102. In this way, wastage of steam and energy may be minimized.

On the other hand, venting more air from the cooking appliance 100 via the exhaust vent 118 may be desirable for other cooking functionality, such as when the cooking appliance 100 is operating in an air frying mode, for which release of humidity from the cooking chamber 102 is desirable to allow drying of food. Such drying of food may be required in order for the intended cooking result, e.g. crunchiness of the cooked food, to be realized.

At least partly for these reasons, the exhaust assembly 117 is configured to change how much air is vented from the cooking appliance 100 via the exhaust vent 118 according to which of the first mode and the second mode is adopted by the motor assembly 108. Thus, controlling how much, e.g. a flow rate of, air vented from the cooking appliance may be implemented by operating component(s), in particular the motor assembly 108, that is/are already included in the cooking appliance 100 for reasons other than venting air therefrom. Simplicity of use and/or physical design of the cooking appliance 100 can therefore be maintained in spite of inclusion of variable exhaust functionality.

The exhaust assembly 117 can be configured in any suitable manner provided that the exhaust assembly 117 enables varying of how much air is vented from the cooking appliance 100 via the exhaust vent 118 according to which of the motor assembly's 108 first mode and second mode is adopted.

Direct and positive verification of such an exhaust assembly 108 configuration can be made by (i) ensuring that steam generation functionality (if any) included in the cooking appliance 100 is disabled and no food or liquid is present in the cooking appliance 100, so that steam production cannot influence measurement of flow rate of air from the exhaust vent 118; (ii) operating the motor assembly 108 in the first mode so that the fan 106 rotates in the first direction, and measuring the flow rate of air from the exhaust vent 118 using an air flow sensor once the cooking appliance 100 has reached a stable operating condition; operating the motor assembly 108 in the second mode so that the fan 106 rotates in the second direction, and measuring the flow rate of air from the exhaust vent 118 using the air flow sensor once the cooking appliance 100 has reached a stable operating condition; and (iv) comparing the flow rates measured in steps (ii) and (iii) to verify that one of the measured flow rates is larger than the other.

The present disclosure can be regarded as providing a cooking appliance 100 whose motor assembly 108 can invert rotation direction of the fan 106, and an exhaust assembly 117, e.g. exhaust opening, that is shaped and orientated to allow different amounts of air to be expelled from the cooking appliance 100 depending on which direction the fan 106 is being rotated by the motor assembly 108.

The first mode of the motor assembly 108 may, for example, be regarded as an exhaust mode, with the second mode of the motor assembly 108 being regarded as a retention mode in which, in comparison to the exhaust mode, there is retention of air in the cooking appliance 100, and in particular in the cooking chamber 102 thereof.

In some embodiments, such as shown in FIG. 2, the exhaust assembly 117 is configured to change how much air is vented from the cooking appliance 100 via the exhaust vent 118 according to which of the first flow direction 115 and the second flow direction 116 the air is displaced along by the fan 106. In such embodiments, the different flow directions 115, 116 of air displaced by the fan 106 when the fan 106 is rotated by the motor assembly 108 in the first and second directions may be used to change how much air is vented from the cooking appliance 100.

For example, air flowing along the first flow direction 115, when the motor assembly 108 is in the first mode, may be received by the exhaust assembly 117 and thereby vented via the exhaust vent 118, whereas air flowing along the second flow direction 116 may bypass the exhaust assembly 117 such that less air in the cooking appliance 100 is vented via the exhaust vent 118 when the motor assembly 108 is in the second mode compared to when the motor assembly 108 is in the first mode.

For operation of the cooking appliance 100 in the air frying mode, in which more air is to be vented/exhausted, the motor assembly 108 may rotate the fan 106 in the first direction. In this case, a circumferential rotational speed of the air may be in a counterclockwise direction, using the view provided in FIG. 2. Thus, the air may be forced through the exhaust vent 118, and the air speed itself may contribute to build-up of pressure (a dynamic pressure component) to increase output flow through the exhaust vent 118.

In such a non-limiting example, operation of the cooking appliance 100 in the steam cooking mode or a moisture retention mode, in which less air is to be vented/exhausted, the motor assembly 108 may rotate the fan 106 in the second direction. In this case, a circumferential rotational speed of the air may be in a clockwise direction, using the view provided in FIG. 2. In this case, air will not, or at least less air, may be forced through the exhaust vent 118, and hence the dynamic pressure component may not contribute in the same way as in the air frying mode to expel the air. Whilst there may still be some degree of venting of air from the cooking appliance 100 in the steam cooking mode or moisture retention mode due to the contribution of a static pressure component, the overall flow rate through the exhaust vent 118 may be lower.

In some embodiments, such as shown in FIG. 2, the exhaust assembly 117 comprises an exhaust channel 119 that extends to reach the exhaust vent 118 at a downstream end of the exhaust channel 119. Such an exhaust channel 119 can be arranged, e.g. orientated, relative to the first and second flow directions 115, 116 so that more air is directed into the exhaust channel 119 when, for example, the air is flowing in the first flow direction 115 than when the air is flowing in the second flow direction 116.

As shown in FIG. 2, the exhaust channel 119 may be arranged so that air displaced by the fan 106 in the first flow direction 115 is directed into the exhaust channel 119 via an upstream opening 120 of the exhaust channel 119, and at least part of air displaced by the fan 106 in the second flow direction 116 is directed past, rather than into, the upstream opening 120. Such positioning of the exhaust channel 119, including the upstream opening 120 of the exhaust channel 119, relative to the first flow direction 115 and the second flow direction 116 in order to vary how much air is vented from the cooking appliance 100 can be regarded as making use of fluid dynamics principles to provide variable exhaust functionality.

In such embodiments, additional moving components, such as a door or slider for controlling venting of air via the exhaust vent 118, and associated user interface elements for controlling such moving components, may be obviated. This may assist to reduce the cost and complexity of the cooking appliance 100, as well as assisting to simplify operation of the cooking appliance 100 for the user.

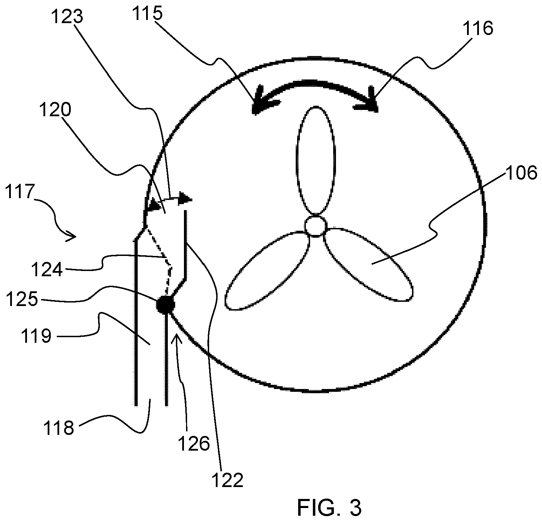

In some embodiments, such as shown in FIG. 3, the exhaust assembly 117 comprises an air restriction member 122, e.g. in the form of a flap, that is moveable by air, displaced by the fan 106 in the second flow direction 116, from an open position to a closed position, in which closed position the air restriction member 122 restricts said venting of air relative to when the air restriction member 122 is in the open position. The double-headed arrow 123 in FIG. 3 denotes movement of the air restriction member 122 between the open and closed positions. Moreover, the dotted line 124 in FIG. 3 indicates the closed position of the air restriction member 122.

The airflow may push the air restriction member 122, e.g. flap, closed when the motor assembly 108 is rotating the fan 106 in the second direction to cause displacement of air in the second flow direction 116, for example when the cooking appliance 100 is being operated in the steam cooking mode or the moisture retention mode.

Such an air restriction member 122 may assist to provide a greater change of the amount, e.g. flow rate, of air being vented from the cooking appliance 100 via the exhaust vent 118 when the motor assembly 108 is in the first mode compared to when the motor assembly 108 is in the second mode.

Since the air restriction member 122 may be moved to the closed position by air displaced by the fan 106 in the second flow direction 116, the user may not be burdened with having to manually move the air restriction member 122 to the closed position and/or additional user interface elements for manually moving the air restriction member 122 may be obviated.

The air restriction member 122 can be moveable in any suitable manner. In some embodiments, such as shown in FIG. 3, the air restriction member 122 is pivotable between the open and closed positions by pivoting of the air restriction member 122 about a pivot point 125.

It is noted that a rotation/pivot axis of the pivotable air restriction member 122 shown in FIG. 3 may extend orthogonal to the plane of the drawing.

In some embodiments, such as shown in FIG. 3, the air restriction member 122 is arranged to open and close the upstream opening 120 of the exhaust channel 119.

The air restriction member 122, e.g. flap, may be in the open position when the motor assembly 108 rotates the fan 106 in the first direction to cause displacement of air in the first flow direction 115, for example when the cooking appliance 100 is being operated in the air frying mode.

In some embodiments, the cooking appliance 100 comprises a biasing element 126 for biasing the air restriction member 122 to the open position, with the air restriction member 122 being moveable against the bias provided by the biasing element 126 by air, displaced by the fan 106 in the second flow direction 116, to cause the air restriction member 122 to move to the closed position. The biasing element 126, such as a spring, e.g. a torsion spring in the case of the pivotable air restriction member 122, may assist to keep the air restriction member 122 in the open position when the motor assembly 108 is in the first mode and the fan 106 is correspondingly displacing air in the first flow direction 115.

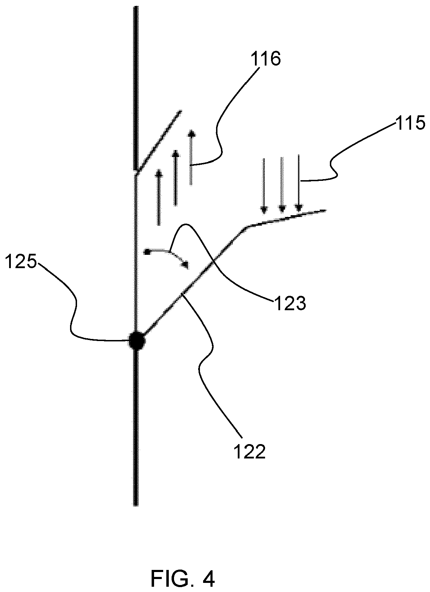

Alternatively or additionally, and referring now to FIG. 4, the air restriction member 122 may be moveable by air, displaced by the fan 106 in the first flow direction 115, to the open position. Thus, the air flowing in the first flow direction 115 may be used to move the air restriction member 122 to the open position, and thereby assist venting of air from the cooking appliance 100 via the exhaust vent 118.

More generally, the air restriction member 122, e.g. flap, may be designed with any suitable geometry to enable the air restriction member 122 to be moved by the airflow in the first flow direction 115 and/or the second flow direction 116.

The air restriction member 122 may be configured to allow fluid communication, via the exhaust vent 118, with the cooking appliance's 100 surroundings when the air restriction member 122 is in the closed position. This can help to minimize the risk of pressure build-up, e.g. in the cooking chamber 102, and/or hot air being released in unintended ways, such as via gaps in a plastic housing, e.g. around the drawer 103A, of the cooking appliance 100. Regarding the latter, deliberately providing fluid communication route(s) past and/or through the air restriction member 122 can assist to minimize the risk that the housing's integrity is compromised by unintended leakage of hot air and/or reduces the risk of condensation formation on an exterior, e.g. a front-facing exterior, of the cooking appliance 100.

In some embodiments, the fluid communication is provided, at least in part, by one or more holes in the air restriction member 122. Such hole(s) may provide a relatively straightforwardly implementable and controllable way of configuring the air restriction member 122 to allow fluid communication with the cooking appliance's 100 surroundings, in other words the atmosphere surrounding the cooking appliance 100, via the exhaust vent 118 when the air restriction member 122 is in the closed position.

In some embodiments, the cooking appliance 100 comprises a user interface (not visible) configured to receive at least one first user entry indicative of user-selection of the first mode of the motor assembly 108, and at least one second user entry indicative of user-selection of the second mode of the motor assembly 108.

The at least one first user entry may, for example, correspond to user selection of the convection cooking mode, e.g. the air frying mode, with the at least one second user entry corresponding to user selection of the steam cooking mode.

The user interface can be of any suitable type. For example, the user interface can include a touchscreen, one or more button(s), and/or dial(s).

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A cooking appliance (100) comprising:
a cooking chamber (102);
a heating element (104);
a circulation system (106, 108) for circulating air heated by the heating element in the cooking chamber, wherein the circulation system comprises a fan (106) and a motor assembly (108), the motor assembly being switchable between a first mode in which the motor assembly rotates the fan in a first direction to displace air along a first flow direction (115), and a second mode in which the motor assembly rotates the fan in a second direction, opposite the first direction, to displace air along a second flow direction (116) different from the first flow direction; and
an exhaust assembly (117) comprising an exhaust vent (118), the exhaust assembly being configured to change how much air is vented from the cooking appliance via the exhaust vent according to which of the first mode and the second mode is adopted by the motor assembly.

2. The cooking appliance (100) according to claim 1, wherein the exhaust assembly (117) is configured to change how much air is vented from the cooking appliance via the exhaust vent (118) according to which of the first flow direction (115) and the second flow direction (116) the air is displaced along by the fan (106).

3. The cooking appliance (100) according to claim 1 or claim 2, wherein the exhaust assembly (117) comprises an exhaust channel (119) that extends to reach the exhaust vent (118) at a downstream end of the exhaust channel.

4. The cooking appliance (100) according to claim 3, wherein the exhaust channel (119) is arranged so that air displaced by the fan (106) in the first flow direction (115) is directed into the exhaust channel via an upstream opening (120) of the exhaust channel, and at least part of air displaced by the fan in the second flow direction (116) is directed past, rather than into, the upstream opening.

5. The cooking appliance (100) according to any one of claims 1 to 4, wherein the exhaust assembly (117) comprises an air restriction member (122) that is moveable by air, displaced by the fan (106) in the second flow direction (116), from an open position to a closed position, in which closed position the air restriction member restricts said venting of air relative to when the air restriction member is in the open position.

6. The cooking appliance (100) according to claim 5, comprising a biasing element (126) for biasing the air restriction member (122) to the open position, the air restriction member being moveable against the bias provided by the biasing element by air, displaced by the fan (106) in the second flow direction (116), to cause the air restriction member to move to the closed position.

7. The cooking appliance (100) according to claim 5, wherein the air restriction member (122) is moveable by air, displaced by the fan (106) in the first flow direction (115), to the open position.

8. The cooking appliance (100) according to any one of claims 5 to 7, wherein the air restriction member (122) is configured to allow fluid communication, via the exhaust vent (118), with the cooking appliance's surroundings when the air restriction member is in the closed position.

9. The cooking appliance (100) according to claim 8, wherein the fluid communication is provided, at least in part, by one or more holes in the air restriction member (122).

10. The cooking appliance (100) according to any one of claims 1 to 9, wherein the motor assembly (108) comprises a direct current, DC, motor.

11. The cooking appliance (100) according to claim 10, wherein the motor assembly (108) is switchable between the first mode and the second mode by inverting a polarity of voltage across the DC motor.

12. The cooking appliance (100) according to any one of claims 1 to 11, wherein the motor assembly (108) is controllable to vary a speed of rotation of the fan (106) in the first mode and/or in the second mode.

13. The cooking appliance (100) according to any one of claims 1 to 12, comprising a user interface configured to receive at least one first user entry indicative of user-selection of the first mode of the motor assembly (108), and at least one second user entry indicative of user-selection of the second mode of the motor assembly.

14. The cooking appliance (100) according to any one of claims 1 to 13, comprising a steam supply and/or steam production assembly for providing steam in the cooking chamber (102).

15. The cooking appliance (100) according to any one of claims 1 to 14, comprising an air-frying appliance.
